# EUROPEAN PATENT SPECIFICATION

(11) **EP 3 542 921 B1**
(45) Date of publication and mention of the grant of the patent: **03.06.2020**
(21) Application number: 17898094.2
(22) Date of filing: 19.09.2017
(51) Int. Cl.: B21J 13/08, B21J 7/28, B21J 9/12, B21J 13/03, B21D 37/04, B21D 37/14, B30B 15/02, B21J 13/06

(54) **HYDRAULIC FORGING MACHINE AND METHOD FOR REPLACING UPPER ANVIL THEREOF**
HYDRAULISCHE SCHMIEDEMASCHINE UND VERFAHREN ZUM ERSETZEN DES OBEREN AMBOSSES DAFÜR
MACHINE DE FORGEAGE HYDRAULIQUE ET PROCÉDÉ DE REMPLACEMENT DE L'ENCLUME SUPÉRIEURE DE CELLE-CI

(30) Priority: 23.02.2017 CN 201710100139; 22.03.2017 CN 201710174377
(43) Date of publication of application: 25.09.2019
(73) Proprietor: Zhongkejuxin Clean Energy & Hot Forging Equipment Research And Development Co., Ltd., Yanchen, Jiangsu 224700 (CN)
(72) Inventor: ZHANG, Lianhua, yanchen Jiangsu 224700 (CN); ZHANG, Hui, yanchen Jiangsu 224700 (CN); MA, Haijun, yanchen Jiangsu 224700 (CN); CHEN, Baijin, yanchen Jiangsu 224700 (CN); LI, Yuanshi, yanchen Jiangsu 224700 (CN)
(74) Representative: Sun, Yiming
(86) International application number: PCT/CN2017/102239
(87) International publication number: WO 2018/153073

(56) References cited:
- EP-A1- 0 043 982
- AT-B- 323 514
- CN-A- 1 121 850
- CN-A- 106 762 929
- CN-U- 201 579 363
- CN-U- 205 673 520
- CN-U- 205 851 760
- CN-Y- 201 127 977
- CN-Y- 201 127 977
- DE-A1- 10 008 945
- JP-A- 2003 230 939
- JP-A- 2003 230 939
- US-A- 3 435 655

## Description

### TECHNICAL FIELD

The present invention relates to the field of hydraulic drive technologies, and in particular to a hydraulic forging machine provided with an improved locking hydraulic circuit for an upper anvil block and a method for replacing the upper anvil block thereof.

### BACKGROUND

In order to quickly replace an upper anvil block of a hydraulic machine in a top-drive high-power hydraulic forging machine set, a quick replacement device is specially provided. The quick replacement device is fixedly mounted on a movable beam and moves up and down with the movable beam. The quick replacement device is structured as follows: a locking hydraulic cylinder is provided between the movable beam and the upper anvil block. The locking hydraulic cylinder is a one-way oil supply structure with a built-in reset spring within a rodless chamber thereof, and has a cylinder body being fixed to the movable beam and a single piston rod stretching in and out of a locking hole for the upper anvil block to quickly unlock and lock the upper anvil block. When pressurized oil is supplied to the locking hydraulic cylinder, a fluid pressure acts against an acting force of the reset spring in the hydraulic cylinder, and the piston rod drives a locking pin to retract so that the upper anvil block is detached. When the pressurized oil is discharged from the locking hydraulic cylinder, the piston rod drives the locking pin to stretch out under the action of the reset spring within the hydraulic cylinder,so that the upper anvil block is locked.

The pressurized oil for the locking hydraulic cylinder for the upper anvil block of the top-drive hydraulic forging machine is controlled by a control valve. The pressured oil coming out of a hydraulic pump is guided to an upper part of a machine body by a metal pipe via the control valve and is then transferred to the locking hydraulic cylinder on the movable beam with a hose being fixed by a drag chain and moving up and down with the movable beam. The pressured oil is supplied to the locking hydraulic cylinder in such a way that only the hose connection can be adopted. The fatigue life and fatigue strength of the hose will result in breakage and oil leakage. In addition, production by the hydraulic forging machine is hot working, and thermal radiation also has direct effect on a life of the hose. The connection with relative movement increases the complexity of pipe connection and reduces the reliability of the locking hydraulic cylinder, so that safe production of the hydraulic machine is affected.

In practical use, a simple and reliable hydraulic oil circuit is desired that not only can achieve a locking function of an upper anvil block, but also does not include any connection part with relative movement.

DE 100 08 945 A1, on which the preamble of claim 1 is based, shows a hydraulic forging machine comprising a locking hydraulic cylinder for controlling locking and unlocking between the upper anvil block and the movable beam.

AT 323 514 B shows a horizontally working forging machine. The clamping cylinder is connected to the constantly effective pressure of the return pipe of the forging plunger. No control valve is provided since the clamping is effected by the constant pressure provided to the forging piston and in order to release the anvil, pressure to the forging piston must be switched off. The unlocking of the anvil is then effected by mechanical springs.

### SUMMARY

An object of the present invention is to provide a hydraulic forging machine and a method for replacing an upper anvil block thereof. An improved locking hydraulic circuit for the upper anvil block is provided on the hydraulic forging machine, which not only achieves a locking function of the upper anvil block, but also allows synchronous movement of an oil supply circuit of a locking device for the upper anvil block and a movable beam, thereby simplifying the oil supply circuit for hydraulic locking, and improving reliability.

To solve the above problem, according to one aspect of the present invention, the present invention provides a hydraulic forging machine, according to claim 1.

One end of the main hydraulic cylinder is connected to a fixed beam, the other end of the main hydraulic cylinder is fixedly connected to the movable beam.

Further, the locking hydraulic cylinder is a single piston rod hydraulic cylinder. A reset spring is provided within a rodless chamber thereof, an oil inlet/ outlet is provided within a rod chamber thereof, the oil inlet/outlet is connected to one end of the connecting pipe, and the upper anvil block is locked and unlocked to/from the movable beam by telescoping of a piston rod of the locking hydraulic cylinder.

Further, when the upper anvil block is to be locked: the pressurized oil is discharged from the rod chamber of the locking hydraulic cylinder to the pressurized oil chamber of the hydraulic cylinder that serves as the hydraulic power source of the locking hydraulic cylinder via the connecting pipe, and the piston rod within the locking hydraulic cylinder stretches out under the action of a spring force of the reset spring within the rodless chamber, such that the piston rod of the locking hydraulic cylinder is locked to the upper anvil block. When the upper anvil block is to be unlocked: the pressurized oil flows from the pressurized oil chamber of the hydraulic cylinder that serves as the hydraulic power source of the locking hydraulic cylinder to the rod chamber of the locking hydraulic cylinder via the connecting pipe, and a fluid pressure within the rod chamber of the locking hydraulic cylinder acts against an acting force of the reset spring to retract the piston rod within the locking hydraulic cylinder, such that the piston rod of the locking hydraulic cylinder is unlocked from the upper anvil block.

Further, when a cylinder body of a hydraulic cylinder that serves as the hydraulic power source of the locking hydraulic cylinder is connected to the movable beam, the cylinder body of the hydraulic cylinder that serves as the hydraulic power source of the locking hydraulic cylinder synchronously moves with the movable beam. The other end of the connecting pipe is in communication with the pressurized oil chamber of the hydraulic cylinder that serves as the hydraulic power source of the locking hydraulic cylinder through the cylinder body of the hydraulic cylinder that serves as the hydraulic power source of the locking hydraulic cylinder.

Further, when a hydraulic cylinder that serves as the hydraulic power source of the locking hydraulic cylinder is a plunger hydraulic cylinder, and a plunger of the hydraulic cylinder that serves as the hydraulic power source of the locking hydraulic cylinder is connected to the movable beam, the plunger of the hydraulic cylinder that serves as the hydraulic power source of the locking hydraulic cylinder moves with the movable beam. A built-in through-flow hole is provided within the plunger of the hydraulic cylinder that serves as the hydraulic power source of the locking hydraulic cylinder, one end of the built-in through-flow hole is in communication with the other end of the connecting pipe,and the other end of the built-in through-flow hole is in communication with the pressurized oil chamber of the hydraulic cylinder that serves as the hydraulic power source of the locking hydraulic cylinder.

Further, when a hydraulic cylinder that serves as the hydraulic power source of the locking hydraulic cylinder is a piston hydraulic cylinder, and a piston rod of the hydraulic cylinder that serves as the hydraulic power source of the locking hydraulic cylinder is connected to the movable beam, the piston rod of the hydraulic cylinder that serves as the hydraulic power source of the locking hydraulic cylinder moves with the movable beam. A built-in through-flow hole is provided within the piston rod of the hydraulic cylinder that serves as the hydraulic power source of the locking hydraulic cylinder, one end of the built-in through-flow hole is in communication with the other end of the connecting pipe, and the other end of the built-in through-flow hole is in communication with the pressurized oil chamber of the hydraulic cylinder that serves as the hydraulic power source of the locking hydraulic cylinder.

Further, a hydraulic cylinder that serves as the hydraulic power source of the locking hydraulic cylinder is the main hydraulic cylinder. The main hydraulic cylinder is a plunger hydraulic cylinder, a cylinder body of the main hydraulic cylinder is connected to the fixed beam of the hydraulic forging machine, and a plunger of the main hydraulic cylinder is connected to the movable beam. A built-in through-flow hole being provided within the plunger of the main hydraulic cylinder, one end of the built-in through-flow hole is in communication with the other end of the connecting pipe, and the other end of the built-in through-flow hole is in communication with a pressurized oil chamber of the main hydraulic cylinder.

Further, a hydraulic cylinder that serves as the hydraulic power source of the locking hydraulic cylinder is the return hydraulic cylinder.

Further, the return hydraulic cylinder is a single piston rod hydraulic cylinder, a cylinder body of the return hydraulic cylinder is connected to the fixed beam of the hydraulic forging machine, and a piston rod of the return hydraulic cylinder is connected to the movable beam. A built-in through-flow hole is provided within the piston rod of the return hydraulic cylinder, one end of the built-in through-flow hole is in communication with the other end of the connecting pipe, and the other end of the built-in through-flow hole is in communication with a rod chamber of the return hydraulic cylinder.

Further, the return hydraulic cylinder is a plunger hydraulic cylinder. A cylinder body of the return hydraulic cylinder is connected to the movable beam, the other end of the connecting pipe is in communication with a pressurized oil chamber of the return hydraulic cylinder through the cylinder body of the return hydraulic cylinder.

The return hydraulic cylinder is a plunger hydraulic cylinder. A plunger of the return hydraulic cylinder is connected to the movable beam, a built-in through-flow hole is provided within the plunger of the return hydraulic cylinder, one end of the built-in through-flow hole is in communication with the other end of the connecting pipe, and the other end of the built-in through-flow hole is in communication with a pressurized oil chamber of the return hydraulic cylinder.

According to the invention, the control valve is configured to control connection and disconnection of a hydraulic oil circuit between a pressurized oil chamber of a hydraulic cylinder that serves as the hydraulic power source of the locking hydraulic cylinder and the locking hydraulic cylinder.

According to another aspect of the present invention, the present invention provides a method for replacing an upper anvil block of a hydraulic forging machine, according to claim 12.

Compared to the prior art, the present invention adopts a hydraulic cylinder in a hydraulic forging machine that is connected to the movable beam as the hydraulic power source of the locking device, so as to avoid a movably connected hydraulic hose and a drag chain of the hose between the movable beam of the hydraulic forging machine and a machine frame, and provide an independent oil supply pipe from the hydraulic system and a control valve to the machine frame, thereby not only achieving synchronous movement of an oil supply circuit of the locking device and the movable beam and simplifying the oil supply circuit for hydraulic locking, but also improving reliability.

### BRIEF DESCRIPTION OF THE DRAWINGS

To illustrate the technical solutions of embodiments of the present invention more clearly, a brief introduction to the accompanying drawings required to describe the embodiments is given below. Obviously, the accompanying drawings in the description below are merely some embodiments of the present invention, based on which other drawings may also be obtained by a person of ordinary skill in the art without any inventive efforts. In the drawings,
Figure 1 is a schematic structural diagram of a hydraulic forging machine in a locked state that is provided with a locking hydraulic circuit for an upper anvil block according to a first embodiment I of the present invention;
Figure 2 is a schematic structural diagram of the hydraulic forging machine in an unlocked state that is provided with a locking hydraulic circuit for an upper anvil block according to the first embodiment of the present invention;
Figure 3 is a schematic structural diagram of a hydraulic forging machine in an unlocked state that is provided with a locking hydraulic circuit for an upper anvil block according to a second embodiment of the present invention;
Figure 4 is a schematic structural diagram of a hydraulic forging machine in an unlocked state that is provided with a locking hydraulic circuit for an upper anvil block according to a third embodiment of the present invention; and
Figure 5 is a schematic structural diagram of a hydraulic forging machine in a locked state that is provided with a locking hydraulic circuit for an upper anvil block according to a fourth embodiment IV of the present invention.

In the drawings, 1 denotes a fixed beam, 2 denotes a main hydraulic cylinder, 201 denotes an oil inflow chamber of the main hydraulic cylinder, 202 denotes a piston rod of the main hydraulic cylinder, 203 denotes a built-in through-flow hole, 3 denotes a return hydraulic cylinder, 301 denotes an oil inflow chamber of the return hydraulic cylinder, 302 denotes a piston rod of the return hydraulic cylinder, 303 denotes a built-in through-flow hole, 4 denotes a movable beam, 5 denotes a single piston rod locking hydraulic cylinder, 6 denotes an upper anvil block, 7 denotes a lower anvil block, 8 denotes a connecting pipe and 9 denotes a control valve.

### DETAILED DESCRIPTION OF THE EMBODIMENTS

To make the above object, features and advantages of the present invention clearer and easier to understand, the present invention will be further illustrated in detail below in connection with the accompanying drawings and particular implementations.

"One embodiment" or "embodiment" herein means a specific feature, structure or characteristic that may be included in at least one implementation of the present invention. "In one embodiment" throughout the specification refers to neither the same embodiment, nor a separate or optional embodiment contradictory to other embodiments.

The present invention is mainly intended to solve the problem of fixing and separating an upper anvil block to/from a movable beam. To fix and separate the upper anvil block to/from the movable beam, an arrangement of a locking hydraulic circuit for the upper anvil block is the key. A hydraulic forging machine provided according to the present invention has an improved locking hydraulic circuit for an upper anvil block, which uses a pressurized oil chamber of a hydraulic cylinder (such as a return hydraulic cylinder or a main hydraulic cylinder) in the hydraulic forging machine connected to a movable beam as a hydraulic power source of the locking hydraulic cylinder, which not only allows synchronous movement of an oil supply circuit of the locking device and the movable beam and simplifies the oil supply circuit for the locking device, but also improves reliability.

### First Embodiment

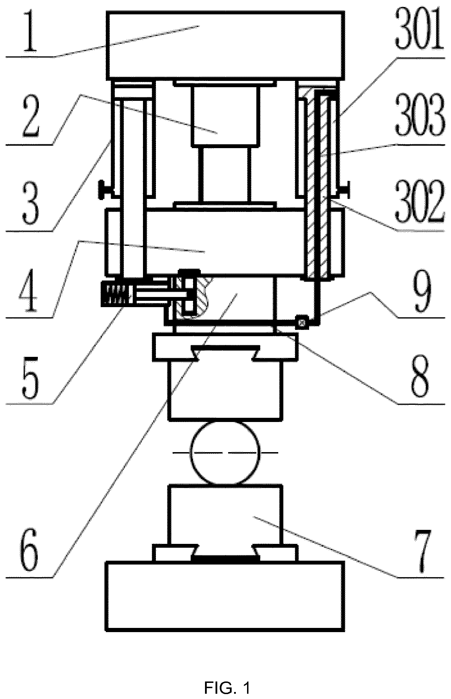

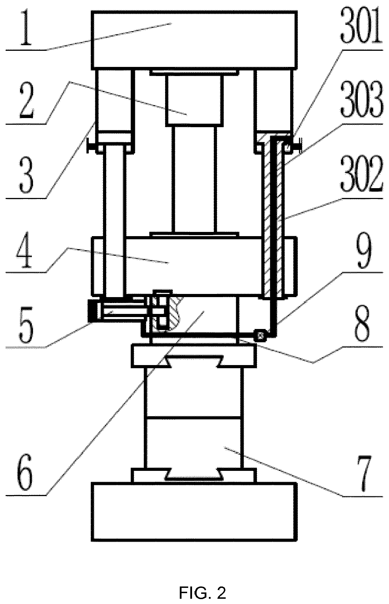

Refer to Figure 1, which is a schematic structural diagram of a hydraulic forging machine in a locked state that is provided with a locking hydraulic circuit for an upper anvil block according to a first embodiment I of the present invention. Refer to Figure 2, which is a schematic structural diagram of the hydraulic forging machine in an unlocked state that is provided with the locking hydraulic circuit for the upper anvil block according to the first embodiment of the present invention.

In the embodiment as shown in Figures 1 and 2, the hydraulic forging machine includes a fixed beam 1, a main hydraulic cylinder 2, a movable beam 4, a pair of return hydraulic cylinders 3, an upper anvil block 6 and a locking hydraulic circuit for the upper anvil block (unlabeled). A cylinder body of the main hydraulic cylinder 2 is connected to the fixed beam 1. A plunger of the main hydraulic cylinder 2 is fixedly connected to an upper part of the movable beam 4. A lower end of the movable beam 4 may be fixedly connected to the upper anvil block 6. Two ends of the fixed beam 1 are fixedly connected to cylinder bodies of the pair of return hydraulic cylinders 3 respectively. Two ends of the movable beam 4 are fixedly connected to piston rods 302 of the pair of return hydraulic cylinders 3 respectively.

In the embodiment as shown in Figures 1 and 2, the locking hydraulic circuit for the upper anvil block includes a locking hydraulic cylinder 5, a connecting pipe 8, a control valve 9 provided on the connecting pipe 8 and a hydraulic cylinder fixedly connected to the movable beam 4 of a hydraulic power source of the locking hydraulic cylinder (i.e., a hydraulic cylinder that is fixedly connected to the movable beam 4 and that may be used as a hydraulic power source of the locking hydraulic cylinder). One end of the connecting pipe 8 is connected to the locking hydraulic cylinder 5, and the other end thereof is connected to a pressurized oil chamber of the hydraulic cylinder that serves as the hydraulic power source of the locking hydraulic cylinder. Pressurized oil flows between the locking hydraulic cylinder 5 and the hydraulic cylinder that serves as the hydraulic power source of the locking hydraulic cylinder via the control valve 9 and the connecting pipe 8. In this embodiment, the hydraulic cylinder that serves as the hydraulic power source of the locking hydraulic cylinder is one of the return hydraulic cylinders 3.

The return hydraulic cylinder 3 is a single piston rod return hydraulic cylinder. A cylinder body of return hydraulic cylinder 3 is connected to the fixed beam 1 and a piston rod 302 of return hydraulic cylinder 3 is connected to the movable beam 4. The locking hydraulic cylinder 5 is a one-way oil supply structure with a built-in reset spring within a rodless chamber and an oil inlet/outlet within a rod chamber. A cylinder body of the locking hydraulic cylinder 5 is fixed to the movable beam 4 and moves up and down with the movable beam 4. The locking hydraulic cylinder locks or unlocks the upper anvil block 6 through telescoping of a piston rod thereof.

A built-in through-flow hole 303 is provided within the piston rod 302 of the return hydraulic cylinder. In the particular embodiment as shown in Figures 1 and 2, the built-in through-flow hole 303 from an annular end face of a rod chamber of the piston rod to an end of the piston rod is provided within the piston rod 302 of the return hydraulic cylinder. The built-in through-flow hole is in the shape of an inverted "L".

One end of the connecting pipe 8 is connected to the rod chamber of the locking hydraulic cylinder 5, and the other end thereof is connected to one end of the built-in through-flow hole 303. The other end of the built-in through-flow hole 303 is connected to an oil inflow chamber (or pressurized oil chamber) 301 of the return hydraulic cylinder, that is, the connecting pipe 8 and the built-in through-flow hole 303 is sequentially connected between the oil inflow chamber 301 of the return hydraulic cylinder and the rod chamber of the locking hydraulic cylinder 5, thereby forming the locking hydraulic circuit for the upper anvil block.

The connecting pipe 8 is fixedly connected to the movable beam 4 and synchronously moves up and down with the movable beam 4. The control valve 9 is provided on the connecting pipe 8 for controlling connection and disconnection of a hydraulic oil circuit between the oil inflow chamber 301 of the return hydraulic cylinder and the locking hydraulic cylinder 5.

When the upper anvil block 6 is to be locked, the pressurized oil is discharged from the rod chamber of the locking hydraulic cylinder 5 to the oil inflow chamber 301 of the return hydraulic cylinder via the connecting pipe 8, a piston of the return hydraulic cylinder 3 and the built-in through-flow hole 303 in the piston rod 302, and the piston rod within the locking hydraulic cylinder 5 stretches out under the action of a spring force of the reset spring within the rodless chamber to lock a locking pin located at an end of the piston rod of the locking hydraulic cylinder 5 to the upper anvil block 6.

When the upper anvil block 6 is to be unlocked: the pressurized oil flows from the oil inflow chamber 301 of the return hydraulic cylinder of the hydraulic forging machine to the rod chamber of the locking hydraulic cylinder 5 via the piston of the return hydraulic cylinder 3, the built-in through-flow hole 303 in the piston rod 302 and the connecting pipe 8, and a fluid pressure within the rod chamber of the locking hydraulic cylinder 5 acts against an acting force of the reset spring to push the piston rod within the locking hydraulic cylinder 5, thus driving the locking pin to be detached from the upper anvil block 6.

For understanding the present invention, a process for replacing the upper anvil block of the hydraulic forging machine as shown in Figures 1 and 2 is introduced in detail below.
a. Demounting is described hereafter. As shown in Figure 2, the upper anvil block 6 is placed on a lower anvil block 7. The control valve 9 is opened. An operator turns an operating handle of the hydraulic forging machine to a slow return position. The pressurized oil enters the oil inflow chamber 301 of the return hydraulic cylinder and then enters the rod chamber of the locking hydraulic cylinder 5 via the built-in through-flow hole 303, the connecting pipe 8 and the control valve 9, which results in an increased oil pressure. The piston rod of the locking hydraulic cylinder 5 drives the locking pin located at the end thereof to retract. The locking pin is pulled out to unlock the original upper anvil block 6. As the oil pressure within the oil inflow chamber 301 of the return hydraulic cylinder further increases, the piston rod 302 of the return hydraulic cylinder moves up to drive up the movable beam 4, so that the movable beam is detached from the original upper anvil block 6 and the original upper anvil block 6 is detached from the lower anvil block 7.
b. Mounting is described hereafter. As shown in Figure 1, a new upper anvil block 6 is placed on the lower anvil block 7 and is aligned to the movable beam 4. The operator operates the operating handle of the hydraulic forging machine to supply pressurized oil to the main hydraulic cylinder 2, such that a piston of the main hydraulic cylinder 2 moves down and drives the movable beam 4 to be combined with the new upper anvil block 6. The oil within the oil inflow chamber 301 of the return hydraulic cylinder enters an oil tank, and at the same time the oil within the rod chamber of the locking hydraulic cylinder 5 returns to the oil inflow chamber 301 of the return hydraulic cylinder. The piston rod of the locking hydraulic cylinder 5 stretches out under the action of the spring force of the reset spring to reset the locking pin and lock the new upper anvil block 6.
c. The control valve 9 is closed after the upper anvil block is replaced, and then the hydraulic forging machine goes down to normal forging work.

### Second Embodiment

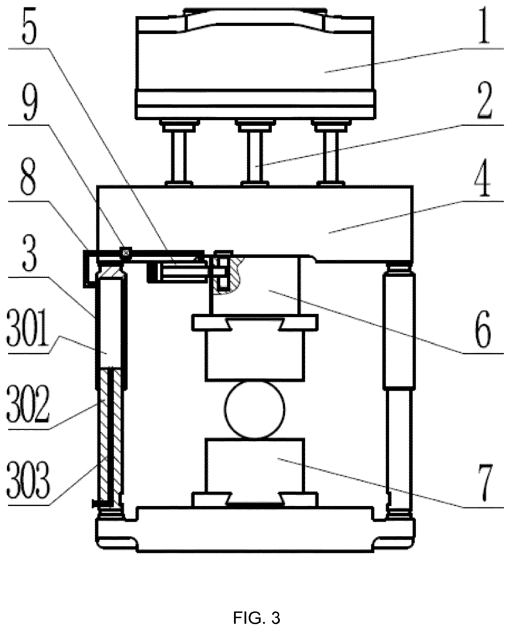

Refer to Figure 3, which is a schematic structural diagram of a hydraulic forging machine in an unlocked state that is provided with a locking hydraulic circuit for an upper anvil block according to a second embodiment of the present invention.

The locking hydraulic circuit for an upper anvil block in Figure 3 is identical with the locking hydraulic circuit for the upper anvil block in Figures 1 and 2 except that: the return hydraulic cylinder 3 in Figure 3 is a plunger cylinder; a cylinder body of the plunger return hydraulic cylinder is connected to the movable beam 4, and the cylinder body of the return hydraulic cylinder 3 synchronously moves with the movable beam 4; one end of the connecting pipe 8 is connected to the rod chamber of the locking hydraulic cylinder 5, and the other end of the connecting pipe 8 is connected to the oil inflow chamber (or pressurized oil chamber) 301 of the return hydraulic cylinder through the cylinder body of the return hydraulic cylinder 3; pressurized oil for the locking hydraulic cylinder 5 on the movable beam 4 is directly guided to the locking hydraulic cylinder 5 from the cylinder body of the return hydraulic cylinder 3.

### Third Embodiment

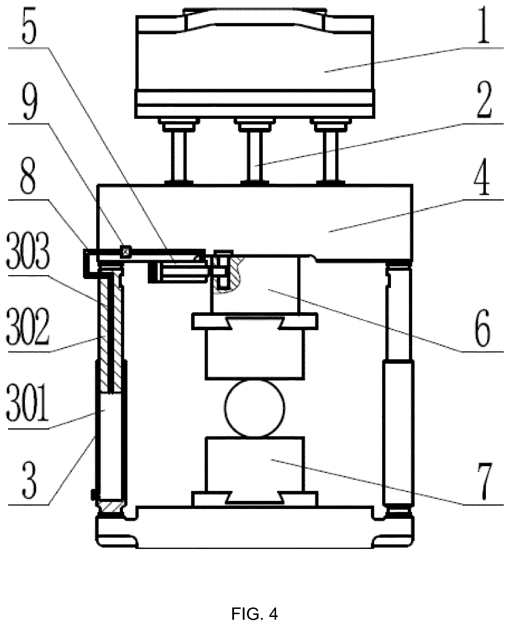

Refer to Figure 4, which is a schematic structural diagram of a hydraulic forging machine in an unlocked state that is provided with a locking hydraulic circuit for an upper anvil block according to a third embodiment of the present invention.

The locking hydraulic circuit for an upper anvil block in Figure 4 is identical with the locking hydraulic circuit for the upper anvil block in Figures 1 and 2 except that: the return hydraulic cylinder 3 in Figure 4 is a plunger cylinder; a plunger of the plunger return hydraulic cylinder 3 is connected to the movable beam 4, and the plunger of the plunger return hydraulic cylinder 3 synchronously moves with the movable beam 4; the built-in through-flow hole 303 is provided within the plunger of the plunger return hydraulic cylinder 3, one end of the built-in through-flow hole 303 is connected to the other end of the connecting pipe 8, and the other end of the built-in through-flow hole 303 is in communication with an oil inflow chamber 301 of the plunger return hydraulic cylinder; pressurized oil for the locking hydraulic cylinder 5 is guided to the locking hydraulic cylinder 5 from the plunger of the plunger return hydraulic cylinder 3.

### Fourth Embodiment

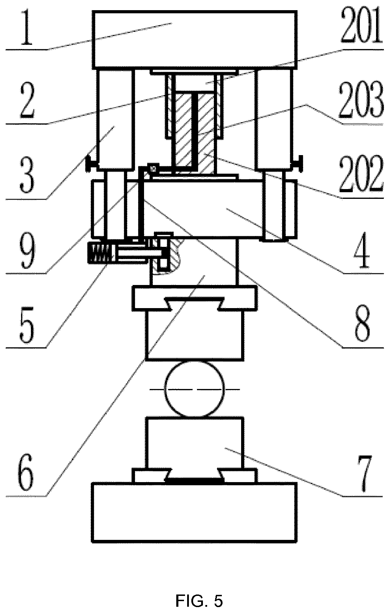

Refer to Figure 5, which is a schematic structural diagram of a hydraulic forging machine in a locked state that is provided with a locking hydraulic circuit for an upper anvil block according to a fourth embodiment of the present invention.

The locking hydraulic circuit for an upper anvil block in Figure 5 is identical with the locking hydraulic circuit for the upper anvil block in Figures 1 and 2 except that: the main hydraulic cylinder 2 serves as the hydraulic power source of the locking hydraulic cylinder. In the fourth embodiment, the main hydraulic cylinder 2 is a plunger hydraulic cylinder. A cylinder body of the main hydraulic cylinder 2 is connected to the fixed beam 1 of the hydraulic forging machine, and a plunger of the main hydraulic cylinder 2 is connected to a movable beam 4. A built-in through-flow hole 203 is provided within the plunger of the main hydraulic cylinder. One end of the built-in through-flow hole 203 is connected to the other end of a connecting pipe 8, and the other end of the built-in through-flow hole 203 is connected to a oil inflow chamber (or pressurized oil chamber) 201 of the main hydraulic cylinder. Locking and unlocking of the locking hydraulic cylinder 5 to/from the upper anvil block 6 are similar to those in the above embodiments, so details are not described herein.

In summary, the locking hydraulic circuit for the upper anvil block of a hydraulic forging machine provided in the present invention uses one hydraulic cylinder (such as the return hydraulic cylinder and/or the main hydraulic cylinder) in the hydraulic forging machine connected to the movable beam as the hydraulic power source of the locking device for the upper anvil block, so as to avoid a movably connected hydraulic hose and a drag chain of the hose between the movable beam of the hydraulic forging machine and a machine frame, and provide an independent oil supply pipe from the hydraulic system and the control valve to the machine frame, thus not only achieving synchronous movement of the oil supply circuit of the locking device and the movable beam and simplifies the oil supply circuit of the locking device, but also improving reliability.

In the present invention, terms indicating a connection such as "connected" "communication" all mean a direct or indirect connection.

It should be noted that any modification made by a person skilled in the art to a specific implementation of the present invention does not depart from the scope of the claims of the present invention. Accordingly, the scope of the claims of the present invention is not merely limited to the specific implementations mentioned above.

## Claims

1. A hydraulic forging machine, comprising a movable beam (4), an upper anvil block (6) being fixedly connected to the movable beam, a locking hydraulic cylinder (5), a connecting pipe (8), and a hydraulic power source of the locking hydraulic cylinder that is fixedly connected to the movable beam, one end of the connecting pipe being connected to the locking hydraulic cylinder,
a main hydraulic cylinder (2) fixedly connected to the movable beam and a return hydraulic cylinder (3) fixedly connected to the movable beam, wherein said main hydraulic cylinder drives said movable beam,
the locking hydraulic cylinder being fixedly connected to the movable beam for controlling locking and unlocking between the upper anvil block and the movable beam,
**characterized in**
a control valve (9) provided on the connecting pipe,
wherein the other end of said connecting pipe is connected to a pressurized oil chamber of said hydraulic power source of said locking hydraulic cylinder, pressurized oil flowing between the locking hydraulic cylinder and the pressurized oil chamber of the hydraulic power source of the locking hydraulic cylinder via the control valve and the connecting pipe, wherein said control valve is configured to control connection and disconnection of a hydraulic oil circuit between said pressurized oil chamber and said locking hydraulic cylinder,
wherein said main hydraulic cylinder or said return hydraulic cylinder is serving as said hydraulic power source of said locking hydraulic cylinder, wherein said pressurized oil chamber is a pressurized oil chamber of the hydraulic cylinder that serves as said hydraulic power source.

2. The hydraulic forging machine of claim 1, **characterized in that** one end of the main hydraulic cylinder is connected to a fixed beam (1), and the other end of the main hydraulic cylinder is fixedly connected to the movable beam.

3. The hydraulic forging machine of claim 1 or 2, **characterized in that** the locking hydraulic cylinder is a single piston rod hydraulic cylinder, and wherein a reset spring is provided within a rodless chamber of the locking hydraulic cylinder, an oil inlet/outlet is provided within a rod chamber of the locking hydraulic cylinder, the oil inlet/outlet is connected to one end of the connecting pipe, and the upper anvil block is locked and unlocked to/from the movable beam by telescoping of a piston rod (202) of the locking hydraulic cylinder.

4. The hydraulic forging machine of claim 3, **characterized in that**
the hydraulic forging machine is configured for locking the upper anvil block wherein the pressurized oil is discharged from the rod chamber of the locking hydraulic cylinder to the pressurized oil chamber of a hydraulic cylinder serving as the hydraulic power source of the locking hydraulic cylinder via the connecting pipe, and the piston rod within the locking hydraulic cylinder stretches out under action of a spring force of the reset spring within the rodless chamber, such that the piston rod of the locking hydraulic cylinder is locked to the upper anvil block; and **in that**
the hydraulic forging machine is configured for unlocking the upper anvil block wherein the pressurized oil flows from the pressurized oil chamber of the hydraulic cylinder serving as the hydraulic power source of the locking hydraulic cylinder to the rod chamber of the locking hydraulic cylinder via the connecting pipe, and a fluid pressure within the rod chamber of the locking hydraulic cylinder acts against an acting force of the reset spring to retract the piston rod within the locking hydraulic cylinder, such that the piston rod of the locking hydraulic cylinder is unlocked from the upper anvil block.

5. The hydraulic forging machine of claim 1 or 2, **characterized in that**
a cylinder body of a hydraulic cylinder serving as the hydraulic power source of the locking hydraulic cylinder is connected to the movable beam, the cylinder body of the hydraulic cylinder serving as the hydraulic power source of the locking hydraulic cylinder synchronously moves with the movable beam, and the other end of the connecting pipe is in communication with the pressurized oil chamber of the hydraulic cylinder serving as the hydraulic power source of the locking hydraulic cylinder through the cylinder body of the hydraulic cylinder serving as the hydraulic power source of the locking hydraulic cylinder.

6. The hydraulic forging machine of claim 1 or 2, **characterized in that**
a hydraulic cylinder serving as the hydraulic power source of the locking hydraulic cylinder is a plunger hydraulic cylinder, and a plunger of the hydraulic cylinder serving as the hydraulic power source of the locking hydraulic cylinder is connected to the movable beam, the plunger of the hydraulic cylinder serving as the hydraulic power source of the locking hydraulic cylinder moves with the movable beam,
and wherein a built-in through-flow hole (303) is provided within the plunger of the hydraulic cylinder serving as the hydraulic power source of the locking hydraulic cylinder, one end of the built-in through-flow hole is in communication with the other end of the connecting pipe, and the other end of the built-in through-flow hole is in communication with the pressurized oil chamber of the hydraulic cylinder serving as the hydraulic power source of the locking hydraulic cylinder.

7. The hydraulic forging machine of claim 1 or 2, **characterized in that**
a hydraulic cylinder serving as the hydraulic power source of the locking hydraulic cylinder is a piston hydraulic cylinder, and a piston rod of the hydraulic cylinder serving as the hydraulic power source of the locking hydraulic cylinder is connected to the movable beam, the piston rod of the hydraulic cylinder serving as the hydraulic power source of the locking hydraulic cylinder moves with the movable beam,
and wherein a built-in through-flow hole is provided within the piston rod of the hydraulic cylinder serving as the hydraulic power source of the locking hydraulic cylinder, one end of the built-in through-flow hole is in communication with the other end of the connecting pipe, and the other end of the built-in through-flow hole is in communication with the pressurized oil chamber of the hydraulic cylinder serving as the hydraulic power source of the locking hydraulic cylinder.

8. The hydraulic forging machine of claim 2, **characterized in that**
the main hydraulic cylinder serves as the hydraulic power source of the locking hydraulic cylinder, and the main hydraulic cylinder is a plunger hydraulic cylinder,
wherein a cylinder body of the main hydraulic cylinder is connected to the fixed beam of the hydraulic forging machine, and a plunger of the main hydraulic cylinder is connected to the movable beam, and
wherein a built-in through-flow hole is provided within the plunger of the main hydraulic cylinder, one end of the built-in through-flow hole is in communication with the other end of the connecting pipe, and the other end of the built-in through-flow hole is in communication with a pressurized oil chamber of the main hydraulic cylinder.

9. The hydraulic forging machine of claim 2, **characterized in that**
the return hydraulic cylinder serves as the hydraulic power source of the locking hydraulic cylinder.

10. The hydraulic forging machine of claim 9, **characterized in that**
the return hydraulic cylinder is a single piston rod hydraulic cylinder, a cylinder body of the return hydraulic cylinder is connected to the fixed beam of the hydraulic forging machine, and a piston rod of the return hydraulic cylinder is connected to the movable beam, and
wherein a built-in through-flow hole is provided within the piston rod of the return hydraulic cylinder, one end of the built-in through-flow hole is in communication with the other end of the connecting pipe, and the other end of the built-in through-flow hole is in communication with a rod chamber of the return hydraulic cylinder.

11. The hydraulic forging machine of claim 9, **characterized in that**
the return hydraulic cylinder is a plunger hydraulic cylinder, a cylinder body of the return hydraulic cylinder is connected to the movable beam, and the other end of the connecting pipe is in communication with a pressurized oil chamber of the return hydraulic cylinder through the cylinder body of the return hydraulic cylinder; or
the return hydraulic cylinder is a plunger hydraulic cylinder, a plunger of the return hydraulic cylinder is connected to the movable beam, a built-in through-flow hole is provided within the plunger of the return hydraulic cylinder, one end of the built-in through-flow hole is in communication with the other end of the connecting pipe, and the other end of the built-in through-flow hole is in communication with a pressurized oil chamber of the return hydraulic cylinder.

12. A method for replacing an upper anvil block (6) of a hydraulic forging machine, the hydraulic forging machine comprising:
a movable beam (4), an upper anvil block (6) being fixedly connected to the movable beam, a locking hydraulic cylinder (5), a connecting pipe (8), a control valve (9) provided on the connecting pipe and a hydraulic power source of the locking hydraulic cylinder that is fixedly connected to the movable beam, one end of the connecting pipe being connected to the locking hydraulic cylinder, the other end of the connecting pipe being connected to a pressurized oil chamber of the hydraulic power source of the locking hydraulic cylinder,
a return hydraulic cylinder (3) being fixedly connected to the movable beam and serving as the hydraulic power source of the locking hydraulic cylinder,
a main hydraulic cylinder (2),
the locking hydraulic cylinder being fixedly connected to the movable beam for controlling locking and unlocking between the upper anvil block and the movable beam,
pressurized oil flowing between the locking hydraulic cylinder and the pressurized oil chamber of the hydraulic power source of the locking hydraulic cylinder via the control valve and the connecting pipe,
one end of the main hydraulic cylinder being fixedly connected to a fixed beam, and the other end of the main hydraulic cylinder being fixedly connected to the movable beam, the method comprising:
demounting one original upper anvil block by placing said one original upper anvil block on a lower anvil block (7); opening the control valve to allow the pressurized oil entering the pressurized oil chamber of the return hydraulic cylinder to enter the locking hydraulic cylinder via the connecting pipe and the control valve to increase an oil pressure, such that the locking hydraulic cylinder controls the original upper anvil block to be unlocked from the movable beam; moving up the movable beam by the return hydraulic cylinder as the oil pressure within the pressurized oil chamber of the return hydraulic cylinder further increases such that the movable beam is separated from the original upper anvil block; and detaching the original upper anvil block from the lower anvil block;
mounting one new upper anvil block by placing said one new upper anvil block on the lower anvil block and aligning the new upper anvil block to the movable beam; inputting the pressurized oil to the main hydraulic cylinder, such that the main hydraulic cylinder drives the movable beam to move down so as to be combined with the new upper anvil block; returning the pressurized oil of the locking hydraulic cylinder to the pressurized oil chamber of the return hydraulic cylinder, such that the locking hydraulic cylinder controls the new upper anvil block to be locked to the movable beam; closing the control valve after the upper anvil block is replaced.

## Patentansprüche

1. Hydraulische Schmiedemaschine, umfassend einen bewegbaren Balken (4), einen oberen Ambossblock (6), welcher mit dem bewegbaren Balken fest verbunden ist, einen Verriegelungshydraulikzylinder (5), ein Verbindungsrohr (8) und eine Hydraulikkraftquelle des Verriegelungshydraulikzylinders, welche mit dem bewegbaren Balken fest verbunden ist, wobei ein Ende des Verbindungsrohrs mit dem Verriegelungshydraulikzylinder verbunden ist,
einen Haupthydraulikzylinder (2), welcher mit dem bewegbaren Balken fest verbunden ist, und einen Rücklaufhydraulikzylinder (3), welcher mit dem bewegbaren Balken fest verbunden ist, wobei der Haupthydraulikzylinder den bewegbaren Balken antreibt,
wobei der Verriegelungshydraulikzylinder mit dem bewegbaren Balken zum Steuern eines Verriegelns und Entriegelns zwischen dem oberen Ambossblock und dem bewegbaren Balken fest verbunden ist,
**gekennzeichnet durch**
ein Steuerventil (9), das auf dem Verbindungsrohr vorgesehen ist,
wobei das andere Ende des Verbindungsrohrs mit einer Druckölkammer der Hydraulikkraftquelle des Verriegelungshydraulikzylinders verbunden ist,
wobei Drucköl zwischen dem Verriegelungshydraulikzylinder und der Druckölkammer der Hydraulikkraftquelle des Verriegelungshydraulikzylinders über das Steuerventil und das Verbindungsrohr fließt, wobei das Steuerventil eingerichtet ist, um eine Verbindung und Trennung eines Hydraulikölkreises zwischen der Druckölkammer und dem Verriegelungshydraulikzylinder zu steuern,
wobei der Haupthydraulikzylinder oder der Rücklaufhydraulikzylinder als die Hydraulikkraftquelle des Verriegelungshydraulikzylinders dienen, wobei die Druckölkammer eine Druckölkammer des Hydraulikzylinders ist, welcher als die Hydraulikkraftquelle dient.

2. Hydraulische Schmiedemaschine nach Anspruch 1, **dadurch gekennzeichnet, dass** ein Ende des Haupthydraulikzylinders mit einem festen Balken (1) verbunden ist und das andere Ende des Haupthydraulikzylinders mit dem bewegbaren Balken fest verbunden ist.

3. Hydraulische Schmiedemaschine nach Anspruch 1 oder 2, **dadurch gekennzeichnet, dass**
der Verriegelungshydraulikzylinder ein Einzel-Kolbenstangen-Hydraulikzylinder ist und wobei eine Rückstellfeder innerhalb einer stangenlosen Kammer des Verriegelungshydraulikzylinders vorgesehen ist, wobei ein Öleinlass/-auslass innerhalb einer Stangenkammer des Verriegelungshydraulikzylinders vorgesehen ist, wobei der Öleinlass/-auslass mit einem Ende des Verbindungsrohrs verbunden ist und wobei der obere Ambossblock mit/von dem bewegbaren Balken durch teleskopisches Ineinanderschieben einer Kolbenstange (202) des Verriegelungshydraulikzylinders verriegelt und entriegelt wird.

4. Hydraulische Schmiedemaschine nach Anspruch 3, **dadurch gekennzeichnet, dass**
die hydraulische Schmiedemaschine zum Verriegeln des oberen Ambossblocks eingerichtet ist, wobei das Drucköl aus der Stangenkammer des Verriegelungshydraulikzylinders in die Druckölkammer des Hydraulikzylinders, welcher als die Hydraulikkraftquelle des Verriegelungshydraulikzylinders dient, über das Verbindungsrohr ausgelassen wird, und wobei sich die Kolbenstange innerhalb des Verriegelungshydraulikzylinders unter einer Wirkung einer Federkraft der Rückstellfeder innerhalb der stangenlosen Kammer derart ausstreckt, dass die Kolbenstange des Verriegelungshydraulikzylinders mit dem oberen Ambossblock verriegelt wird; und darin, dass
die hydraulische Schmiedemaschine zum Entriegeln des oberen Ambossblocks eingerichtet ist, wobei das Drucköl von der Druckölkammer des Hydraulikzylinders, welcher als die Hydraulikkraftquelle des Verriegelungshydraulikzylinders dient, in die Stangenkammer des Verriegelungshydraulikzylinders über das Verbindungsrohr fließt, und wobei ein Fluiddruck innerhalb der Stangenkammer des Verriegelungshydraulikzylinders entgegen einer Wirkkraft der Rückstellfeder wirkt, um die Kolbenstange innerhalb des Verriegelungshydraulikzylinders derart zurückzuziehen, dass die Kolbenstange des Verriegelungshydraulikzylinders von dem oberen Ambossblock entriegelt wird.

5. Hydraulische Schmiedemaschine nach Anspruch 1 oder 2, **dadurch gekennzeichnet, dass**
ein Zylinderkörper eines Hydraulikzylinders, welcher als die Hydraulikkraftquelle des Verriegelungshydraulikzylinders dient, mit dem bewegbaren Balken verbunden ist, wobei sich der Zylinderkörper des Hydraulikzylinders, welcher als die Hydraulikkraftquelle des Verriegelungshydraulikzylinders dient, mit dem bewegbaren Balken synchron bewegt, und wobei das andere Ende des Verbindungsrohrs mit der Druckölkammer des Hydraulikzylinder, welcher als die Hydraulikkraftquelle des Verriegelungshydraulikzylinders dient, durch den Zylinderkörper des Hydraulikzylinders, welcher als die Hydraulikkraftquelle des Verriegelungshydraulikzylinders dient, in Verbindung ist.

6. Hydraulische Schmiedemaschine nach Anspruch 1 oder 2, **dadurch gekennzeichnet, dass**
ein Hydraulikzylinder, welcher als die Hydraulikkraftquelle des Verriegelungshydraulikzylinders dient, ein Tauchkolbenhydraulikzylinder ist und ein Tauchkolben des Hydraulikzylinders, welcher als die Hydraulikkraftquelle des Verriegelungshydraulikzylinders dient, mit dem bewegbaren Balken verbunden ist, wobei sich der Tauchkolben des Hydraulikzylinders, welcher als die Hydraulikkraftquelle des Verriegelungshydraulikzylinders dient, mit dem bewegbaren Balken bewegt,
und wobei ein eingebautes Durchflussloch (303) innerhalb des Tauchkolbens des Hydraulikzylinders, welcher als die Hydraulikkraftquelle des Verriegelungshydraulikzylinders dient, vorgesehen ist, wobei ein Ende des eingebauten Durchflusslochs mit dem anderen Ende des Verbindungsrohrs in Verbindung ist und wobei das andere Ende des eingebauten Durchflusslochs mit der Druckölkammer des Hydraulikzylinders, welcher als die Hydraulikkraftquelle des Verriegelungshydraulikzylinders dient, in Verbindung ist.

7. Hydraulische Schmiedemaschine nach Anspruch 1 oder 2, **dadurch gekennzeichnet, dass**
ein Hydraulikzylinder, welcher als die Hydraulikkraftquelle des Verriegelungshydraulikzylinders dient, ein Kolbenhydraulikzylinder ist und eine Kolbenstange des Hydraulikzylinders, welcher als die Hydraulikkraftquelle des Verriegelungshydraulikzylinders dient, mit dem bewegbaren Balken verbunden ist, wobei sich die Kolbenstange des Hydraulikzylinders, welcher als die Hydraulikkraftquelle des Verriegelungshydraulikzylinders dient, mit dem bewegbaren Balken bewegt,
und wobei ein eingebautes Durchflussloch innerhalb der Kolbenstange des Hydraulikzylinders, welcher als die Hydraulikkraftquelle des Verriegelungshydraulikzylinders dient, vorgesehen ist, wobei ein Ende des eingebauten Durchflusslochs mit dem anderen Ende des Verbindungsrohrs in Verbindung ist und wobei das andere Ende des eingebauten Durchflusslochs mit der Druckölkammer des Hydraulikzylinders, welcher als die Hydraulikkraftquelle des Verriegelungshydraulikzylinders dient, in Verbindung ist.

8. Hydraulische Schmiedemaschine nach Anspruch 2, **dadurch gekennzeichnet, dass**
der Haupthydraulikzylinder als die Hydraulikkraftquelle des Verriegelungshydraulikzylinders dient und der Haupthydraulikzylinder ein Tauchkolbenhydraulikzylinder ist,
wobei ein Zylinderkörper des Haupthydraulikzylinders mit dem festen Balken der hydraulischen Schmiedemaschine verbunden ist und ein Tauchkolben des Haupthydraulikzylinders mit dem bewegbaren Balken verbunden ist, und
wobei ein eingebautes Durchflussloch innerhalb des Tauchkolbens des Haupthydraulikzylinders vorgesehen ist, wobei ein Ende des eingebauten Durchflusslochs mit dem anderen Ende des Verbindungsrohrs in Verbindung ist und wobei das andere Ende des eingebauten Durchflusslochs mit einer Druckölkammer des Haupthydraulikzylinders in Verbindung ist.

9. Hydraulische Schmiedemaschine nach Anspruch 2, **dadurch gekennzeichnet, dass** der Rücklaufhydraulikzylinder als die Hydraulikkraftquelle des Verriegelungshydraulikzylinders dient.

10. Hydraulische Schmiedemaschine nach Anspruch 9, **dadurch gekennzeichnet, dass**
der Rücklaufhydraulikzylinder ein Einzel-Kolbenstangen-Hydraulikzylinder ist, ein Zylinderkörper des Rücklaufhydraulikzylinders mit dem festen Balken der hydraulischen Schmiedemaschine verbunden ist und eine Kolbenstange des Rücklaufhydraulikzylinders mit dem bewegbaren Balken verbunden ist, und
wobei ein eingebautes Durchflussloch innerhalb der Kolbenstange des Rücklaufhydraulikzylinders vorgesehen ist, wobei ein Ende des eingebauten Durchflusslochs mit dem anderen Ende des Verbindungsrohrs in Verbindung ist und wobei das andere Ende des eingebauten Durchflusslochs mit einer Stangenkammer des Rücklaufhydraulikzylinders in Verbindung ist.

11. Hydraulische Schmiedemaschine nach Anspruch 9, **dadurch gekennzeichnet, dass**
der Rücklaufhydraulikzylinder ein Tauchkolbenhydraulikzylinder ist, ein Zylinderkörper des Rücklaufhydraulikzylinders mit dem bewegbaren Balken verbunden ist und das andere Ende des Verbindungsrohrs mit einer Druckölkammer des Rücklaufhydraulikzylinders durch den Zylinderkörper des Rücklaufhydraulikzylinders in Verbindung ist; oder
der Rücklaufhydraulikzylinder ein Tauchkolbenhydraulikzylinder ist, wobei ein Tauchkolben des Rücklaufhydraulikzylinders mit dem bewegbaren Balken verbunden ist, wobei ein eingebautes Durchflussloch innerhalb des Tauchkolbens des Rücklaufhydraulikzylinders vorgesehen ist, wobei ein Ende des eingebauten Durchflusslochs mit dem anderen Ende des Verbindungsrohrs in Verbindung ist und wobei das andere Ende des eingebauten Durchflusslochs mit einer Druckölkammer des Rücklaufhydraulikzylinders in Verbindung ist.

12. Verfahren zum Ersetzen eines oberen Ambossblocks (6) einer hydraulischen Schmiedemaschine,
wobei die hydraulische Schmiedemaschine umfasst:
einen bewegbaren Balken (4), einen oberen Ambossblock (6), welcher mit dem bewegbaren Balken fest verbunden ist, einen Verriegelungshydraulikzylinder (5), ein Verbindungsrohr (8), ein Steuerventil (9), welches auf dem Verbindungsrohr vorgesehen ist, und eine Hydraulikkraftquelle des Verriegelungshydraulikzylinders, welche mit dem bewegbaren Balken fest verbunden ist, wobei ein Ende des Verbindungsrohrs mit dem Verriegelungshydraulikzylinder verbunden ist, wobei das andere Ende des Verbindungsrohrs mit einer Druckölkammer der Hydraulikkraftquelle des Verriegelungshydraulikzylinders verbunden ist,
einen Rücklaufhydraulikzylinder (3), welcher mit dem bewegbaren Balken fest verbunden ist und als die Hydraulikkraftquelle des Verriegelungshydraulikzylinders dient,
einen Haupthydraulikzylinder (2),
wobei der Verriegelungshydraulikzylinder mit dem bewegbaren Balken zum Steuern eines Verriegelns und Entriegelns zwischen dem oberen Ambossblock und dem bewegbaren Balken fest verbunden ist,
wobei Drucköl zwischen dem Verriegelungshydraulikzylinder und der Druckölkammer der Hydraulikkraftquelle des Verriegelungshydraulikzylinders über das Steuerventil und das Verbindungsrohr fließt,
wobei ein Ende des Haupthydraulikzylinders mit einem festen Balken fest verbunden ist und das andere Ende des Haupthydraulikzylinders mit dem bewegbaren Balken fest verbunden ist,
wobei das Verfahren umfasst:
Demontieren eines ursprünglichen oberen Ambossblocks, indem der eine ursprüngliche obere Ambossblock auf einem unteren Ambossblock (7) platziert wird;
Öffnen des Steuerventils, um zu ermöglichen, dass das Drucköl, welches in die Druckölkammer des Rücklaufhydraulikzylinders eintritt, in den Verriegelungshydraulikzylinder über das Verbindungsrohr und das Steuerventil eintritt, um einen Öldruck zu erhöhen, sodass der Verriegelungshydraulikzylinder den ursprünglichen oberen Ambossblock steuert, sodass er von dem bewegbaren Balken entriegelt wird; Bewegen nach oben des bewegbaren Balkens durch den Rücklaufhydraulikzylinder, wenn der Öldruck innerhalb der Druckölkammer des Rücklaufhydraulikzylinders weiter steigt, sodass der bewegbare Balken von dem ursprünglichen oberen Ambossblock getrennt wird; und Ablösen des ursprünglichen oberen Ambossblocks von dem unteren Ambossblock;
Montieren eines neuen oberen Ambossblocks, indem der eine neue obere Ambossblock auf dem unteren Ambossblock platziert wird und der neue obere Ambossblock zu dem bewegbaren Balken ausgerichtet wird; Einlassen des Drucköls in den Haupthydraulikzylinder, sodass der Haupthydraulikzylinder den bewegbaren Balken antreibt, sich nach unten zu bewegen, um mit dem neuen oberen Ambossblock kombiniert zu werden; Rückführen des Drucköls des Verriegelungshydraulikzylinders in die Druckölkammer des Rücklaufhydraulikzylinders, sodass der Verriegelungshydraulikzylinder den neuen oberen Ambossblock steuert, sodass er mit dem bewegbaren Balken verriegelt wird;
Schließen des Steuerventils, nachdem der obere Ambossblock ersetzt wurde.

## Revendications

1. Machine de forgeage hydraulique, comprenant une poutre mobile (4), un bloc d'enclume supérieur (6) étant relié fixement à la poutre mobile, un vérin hydraulique de verrouillage (5), un tube de connexion (8) et une source de puissance hydraulique du vérin hydraulique de verrouillage qui est reliée fixement à la poutre mobile, une extrémité du tube de connexion étant connectée au vérin hydraulique de verrouillage,
un vérin hydraulique principal (2) relié fixement à la poutre mobile et un vérin hydraulique de retour (3) relié fixement à la poutre mobile, dans laquelle ledit vérin hydraulique principal entraîne ladite poutre mobile,
le vérin hydraulique de verrouillage étant relié fixement à la poutre mobile pour commander le verrouillage et le déverrouillage entre le bloc d'enclume supérieur et la poutre mobile,
**caractérisé par**
une soupape de commande (9) prévue sur le tube de connexion,
dans laquelle l'autre extrémité dudit tube de connexion est reliée à une chambre à huile comprimée de ladite source de puissance hydraulique dudit vérin hydraulique de verrouillage,
de l'huile comprimée s'écoulant entre le vérin hydraulique de verrouillage et la chambre à huile comprimée de la source de puissance hydraulique du vérin hydraulique de verrouillage par le biais de la soupape de commande et le tube de connexion, dans laquelle ladite soupape de commande est configurée pour commander la connexion et la déconnexion d'un circuit d'huile hydraulique entre ladite chambre à huile comprimée et ledit vérin hydraulique de verrouillage,
dans laquelle ledit vérin hydraulique principal ou ledit vérin hydraulique de retour sert en tant que ladite source de puissance hydraulique dudit vérin hydraulique de verrouillage, dans laquelle ladite chambre à huile comprimée est une chambre à huile comprimée du vérin hydraulique qui sert en tant que ladite source de puissance hydraulique.

2. Machine de forgeage hydraulique selon la revendication 1, **caractérisée en ce qu'**une extrémité du vérin hydraulique principal est reliée à une poutre fixe (1) et l'autre extrémité du vérin hydraulique principal est reliée fixement à la poutre mobile.

3. Machine de forgeage hydraulique selon la revendication 1 ou 2, **caractérisée en ce que** le vérin hydraulique de verrouillage est un vérin hydraulique à tige de piston unique, et dans laquelle un ressort de rappel est prévu à l'intérieur d'une chambre sans tige du vérin hydraulique de verrouillage, une entrée/sortie d'huile est prévue à l'intérieur d'une chambre de tige du vérin hydraulique de verrouillage, l'entrée/la sortie d'huile est prévue à l'intérieur d'une chambre de tige du vérin hydraulique de verrouillage, l'entrée/la sortie d'huile est reliée à une extrémité du tube de connexion, et le bloc d'enclume supérieur est verrouillé à/déverrouillé de la poutre mobile par télescopage d'une tige de piston (202) du vérin hydraulique de verrouillage.

4. Machine de forgeage hydraulique selon la revendication 3, **caractérisée en ce que** la machine de forgeage hydraulique est configurée pour verrouiller le bloc d'enclume supérieur, dans laquelle l'huile comprimée est déchargée de la chambre de tige du vérin hydraulique de verrouillage vers la chambre à huile comprimée d'un vérin hydraulique servant en tant que la source de puissance hydraulique du vérin hydraulique de verrouillage par le biais du tube de connexion, et la tige de piston à l'intérieur du vérin hydraulique de verrouillage s'étire sous l'action d'une force de ressort du ressort de rappel à l'intérieur de la chambre sans tige de telle façon que la tige de piston du vérin hydraulique de verrouillage est verrouillée au bloc d'enclume supérieur ; et **en ce que**
la machine de forgeage hydraulique est configurée pour déverrouiller le bloc d'enclume supérieur, dans laquelle l'huile comprimée s'écoule de la chambre à huile comprimée servant en tant que la source de puissance hydraulique du vérin hydraulique de verrouillage vers la chambre de tige du vérin hydraulique de verrouillage par le biais du tube de connexion, et une pression fluidique à l'intérieur de la chambre de tige du vérin hydraulique de verrouillage agit contre une force d'action du ressort de rappel pour rétracter la tige de piston à l'intérieur du vérin hydraulique de verrouillage, de telle façon que la tige du piston du vérin hydraulique de verrouillage est déverrouillée du bloc d'enclume supérieur.

5. Machine de forgeage hydraulique selon la revendication 1 ou 2, **caractérisée en ce qu'**un corps de cylindre d'un vérin hydraulique servant en tant que la source de puissance hydraulique du vérin hydraulique de verrouillage est relié à la poutre mobile, le corps de cylindre du vérin hydraulique servant en tant que la source de puissance hydraulique du vérin hydraulique de verrouillage se déplace de manière synchrone avec la poutre mobile, et l'autre extrémité du tube de connexion est en communication avec la chambre à huile comprimée du vérin hydraulique servant en tant que la source de puissance hydraulique du vérin hydraulique de verrouillage à travers le corps de cylindre du vérin hydraulique servant en tant que la source de puissance hydraulique du vérin hydraulique de verrouillage.

6. Machine de forgeage hydraulique selon la revendication 1 ou 2, **caractérisée en ce qu'**un vérin hydraulique servant en tant que la source de puissance hydraulique du vérin hydraulique de verrouillage est un vérin hydraulique à plongeur, et un plongeur du vérin hydraulique servant en tant que la source de puissance hydraulique du vérin hydraulique de verrouillage est relié à la poutre mobile, le plongeur du vérin hydraulique servant en tant que la source de puissance hydraulique du vérin hydraulique de verrouillage se déplace avec la poutre mobile,
et dans laquelle un trou traversant encastré (303) est prévu à l'intérieur du plongeur du vérin hydraulique servant en tant que la source de puissance hydraulique du vérin hydraulique de verrouillage, une extrémité du trou traversant encastré est en communication avec l'autre extrémité du tube de connexion et l'autre extrémité du trou traversant encastré est en communication avec la chambre à huile comprimée du vérin hydraulique servant en tant que la source de puissance hydraulique du vérin hydraulique de verrouillage.

7. Machine de forgeage hydraulique selon la revendication 1 ou 2, **caractérisée en ce qu'**un vérin hydraulique servant en tant que la source de puissance hydraulique du vérin hydraulique de verrouillage est un vérin hydraulique à piston, et une tige de piston du vérin hydraulique servant en tant que la source de puissance hydraulique du vérin hydraulique de verrouillage est reliée à la poutre mobile, la tige de piston du vérin hydraulique servant en tant que la source de puissance hydraulique du vérin hydraulique de verrouillage se déplace avec la poutre mobile,
et dans laquelle un trou traversant encastré est prévu à l'intérieur de la tige de piston du vérin hydraulique servant en tant que la source de puissance hydraulique du vérin hydraulique de verrouillage, une extrémité du trou traversant encastré est en communication avec l'autre extrémité du tube de connexion et l'autre extrémité du trou traversant encastré est en communication avec la chambre à huile comprimée du vérin hydraulique servant en tant que la source de puissance hydraulique du vérin hydraulique de verrouillage.

8. Machine de forgeage hydraulique selon la revendication 2, **caractérisée en ce que** le vérin hydraulique principal sert en tant que la source de puissance hydraulique du vérin hydraulique de verrouillage, et le vérin hydraulique principal est un vérin hydraulique à plongeur,
dans laquelle un corps de cylindre du vérin hydraulique principal est relié à la poutre fixe de la machine de forgeage hydraulique, et un plongeur du vérin hydraulique principal est relié à la poutre mobile, et
dans laquelle un trou traversant encastré est prévu à l'intérieur du plongeur du vérin hydraulique principal, une extrémité du trou traversant encastré est en communication avec l'autre extrémité du tube de connexion et l'autre extrémité du trou traversant encastré est en communication avec une chambre à huile comprimée du vérin hydraulique principal.

9. Machine de forgeage hydraulique selon la revendication 2, **caractérisée en ce que** le vérin hydraulique de retour sert en tant que la source de puissance hydraulique du vérin hydraulique de verrouillage.

10. Machine de forgeage hydraulique selon la revendication 9, **caractérisée en ce que** le vérin hydraulique de retour est un vérin hydraulique à tige de piston unique, un corps de cylindre du vérin hydraulique de retour est relié à la poutre fixe de la machine de forgeage hydraulique, et une tige de piston du vérin hydraulique de retour est reliée à la poutre mobile, et
dans laquelle un trou traversant encastré est prévu à l'intérieur de la tige de piston du vérin hydraulique de retour, une extrémité du trou traversant encastré est en communication avec l'autre extrémité du tube de connexion et l'autre extrémité du trou traversant encastré est en communication avec une chambre de tige du vérin hydraulique de retour.

11. Machine de forgeage hydraulique selon la revendication 9, **caractérisée en ce que** le vérin hydraulique de retour est un vérin hydraulique à plongeur, un corps de cylindre du vérin hydraulique de retour est relié à la poutre mobile, et l'autre extrémité du tube de connexion est en communication avec une chambre à huile comprimée du vérin hydraulique de retour à travers le corps de cylindre du vérin hydraulique de retour ; ou
le vérin hydraulique de retour est un vérin hydraulique à plongeur, un plongeur du vérin hydraulique de retour est relié à la poutre mobile, un trou traversant encastré est prévu à l'intérieur du plongeur du vérin hydraulique de retour, une extrémité du trou traversant encastré est en communication avec l'autre extrémité du tube de connexion, et l'autre extrémité du trou traversant encastré est en communication avec une chambre à huile comprimée du vérin hydraulique de retour.

12. Procédé pour remplacer un bloc d'enclume supérieur (6) d'une machine de forgeage hydraulique, la machine de forgeage hydraulique comprenant :
une poutre mobile (4), un bloc d'enclume supérieur (6) étant relié fixement à la poutre mobile, un vérin hydraulique de verrouillage (5), un tube de connexion (8), une soupape de commande (9) prévue sur le tube de connexion et une source de puissance hydraulique du vérin hydraulique de verrouillage qui est reliée fixement à la poutre mobile, une extrémité du tube de connexion étant connectée au vérin hydraulique de verrouillage, l'autre extrémité du tube de connexion étant reliée à une chambre à huile comprimée de la source de puissance hydraulique du vérin hydraulique de verrouillage,
un vérin hydraulique de retour (3) étant relié fixement à la poutre mobile et servant en tant que la source de puissance hydraulique du vérin hydraulique de verrouillage,
un vérin hydraulique principal (2),
le vérin hydraulique de verrouillage étant relié fixement à la poutre mobile pour commander le verrouillage et le déverrouillage entre le bloc d'enclume supérieur et la poutre mobile,
de l'huile comprimée s'écoulant entre le vérin hydraulique de verrouillage et la chambre à huile comprimée de la source de puissance hydraulique du vérin hydraulique de verrouillage par le biais de la soupape de commande et le tube de connexion,
une extrémité du vérin hydraulique principal étant reliée fixement à une poutre fixe, et l'autre extrémité du vérin hydraulique principal étant reliée fixement à la poutre mobile, le procédé comprenant :
de démonter le bloc d'enclume supérieur d'origine en plaçant ledit bloc d'enclume supérieur d'origine sur un bloc d'enclume inférieur (7) ;
d'ouvrir la soupape de commande pour permettre à l'huile comprimée entrant dans la chambre à huile comprimée du vérin hydraulique de retour d'entrer dans le vérin hydraulique de verrouillage par le biais du tube de connexion et la soupape de commande pour augmenter une pression d'huile, de telle façon que le vérin hydraulique de verrouillage commande le bloc d'enclume supérieur d'origine pour être déverrouillé de la poutre mobile ; de déplacer la poutre mobile vers le haut par le vérin hydraulique de retour à mesure que la pression d'huile à l'intérieur de la chambre à huile comprimée du vérin hydraulique de retour continue d'augmenter de façon à ce que la poutre mobile soit séparée du bloc d'enclume supérieur d'origine ; et de séparer le bloc d'enclume supérieur d'origine du bloc d'enclume inférieur ;
de monter un nouveau bloc d'enclume supérieur en plaçant ledit nouveau bloc d'enclume supérieur sur le bloc d'enclume inférieur et d'aligner le nouveau bloc d'enclume supérieur sur la poutre mobile ; de faire entrer l'huile comprimée vers le vérin hydraulique principal de telle façon que le vérin hydraulique principal entraîne la poutre mobile à baisser de façon à être combinée avec le nouveau bloc d'enclume supérieur ; de renvoyer l'huile comprimée du vérin hydraulique de verrouillage vers la chambre à huile comprimée du vérin hydraulique de retour de façon à ce que le vérin hydraulique de verrouillage commande le nouveau bloc d'enclume supérieur pour être déverrouillé sur la poutre mobile ; de fermer la soupape de commande après que le bloc d'enclume supérieur est remplacé.
